## Europäisches Patentamt
## European Patent Office
## Office européen des brevets

(19)

(11) Publication number: **0 242 983**
**A2**

(12) # EUROPEAN PATENT APPLICATION

(21) Application number: **87302361.8**

(22) Date of filing: **19.03.87**

(51) Int. Cl.³: **G 01 S 13/87**

(30) Priority: **21.04.86 US 854226**

(43) Date of publication of application:
**28.10.87 Bulletin 87/44**

(84) Designated Contracting States:
**DE FR GB IT NL**

(71) Applicant: **Unisys Corporation**
**P.O. Box 500**
**Blue Bell Pennsylvania 19424(US)**

(72) Inventor: **Halsey, James Doss**
**225 Shamrock Road**
**Charlottesville Virginia 22903(US)**

(72) Inventor: **Riggs, Robert Forest**
**109A Stewart Circle**
**Charlottesville Virginia 22903(US)**

(74) Representative: **Singleton, Jeffrey et al,**
**ERIC POTTER & CLARKSON 27 South Street**
**Reading Berkshire, RG1 4QU(GB)**

(54) **Transponder based positioning system.**

(57) Apparatus for establishing a reference coordinate grid in the system memory aboard a vehicle to be operated in conjunction with an array of transponders (1, 2, 3, 4) in a transponder positioning system. A 'smart' transponder (1) provides coded signals to access all transponders. An interrogation code is used in a direct mode to measure distances ($R_1$, $R_3$) between the smart transponder (1) and individual adjacent transponders (2, 4) while a relay code is used in a relay mode to measure distances ($R_2$, $R_4$, $R_5$, $R_6$) between pairs of remote transponders.

FIG.1.

EP 0 242 983 A2

## TRANSPONDER BASED POSITIONING SYSTEM

The present invention relates to electronic apparatus for positioning a moving vehicle relative to an array of fixed position transponders and more specifically to a method and means for the acquisition of initial system parameters by the vehicle's system memory.

There is a need for systems which will provide accurate vehicle positions within a given area. One such system in the prior art is disclosed in U.S.-A-4,510,496 and this utilises short pulse baseband signals to guide a vehicle to a predetermined location. A transmitter aboard the vehicle radiates electromagnetic pulses at specified intervals. These pulses are received at the predetermined location where they trigger transmitters at selected known positions. The time delay between the signals transmitted from the vehicle and the return signals from the known positions are utilised by a processor on the vehicle to calculate its position with respect to the predetermined location.

In the prior art system the vehicle is destined to the predetermined location, and vehicle position accuracy is most important in the location vicinity. Applications exist wherein vehicles do not have fixed destinations but must traverse specified courses in a given region. In these systems vehicle position accuracy is of equal importance throughout the region.

The present invention is defined in the appended claims and provides a vehicle positioning system which accurately locates transponders situated at fixed locations about an area within which the vehicle position is to be guided or tracked. The location of the transponders is determined relative to a "smart" transponder whereat provision for coupling to an interrogator on board the vehicle is available. Each transponder has an assigned interrogation code which, when received, causes that transponder to emit a pulsed signal. Additionally, selected transponders have assigned relay codes which, when received, cause the transponders to emit the interrogation code of another transponder, thus establishing a selected transmission path. The elapsed time between the transmission of the interrogation or relay codes and the reception of the responsive pulse determines the transmission path. A sufficient number of path lengths are established for the accurate determination of the location of all the transponders relative to the location of the "smart" transponder. The resultant information is entered in the vehicle's memory for future positioning computations.

The invention will now be described in greater detail, by way of example, with reference to the accompanying drawings, in which:-

Figure 1 is a diagram illustrating a typical array of transponders to which the present invention may be applied,

Figure 2 is a chart useful in explaining the operation of the invention,

Figure 3 is a block diagram depicting a smart transponder circuit and the interrogation circuit on board a vehicle, and

Figures 4-6 are block diagrams of transponder circuits useful in practicing the present invention.

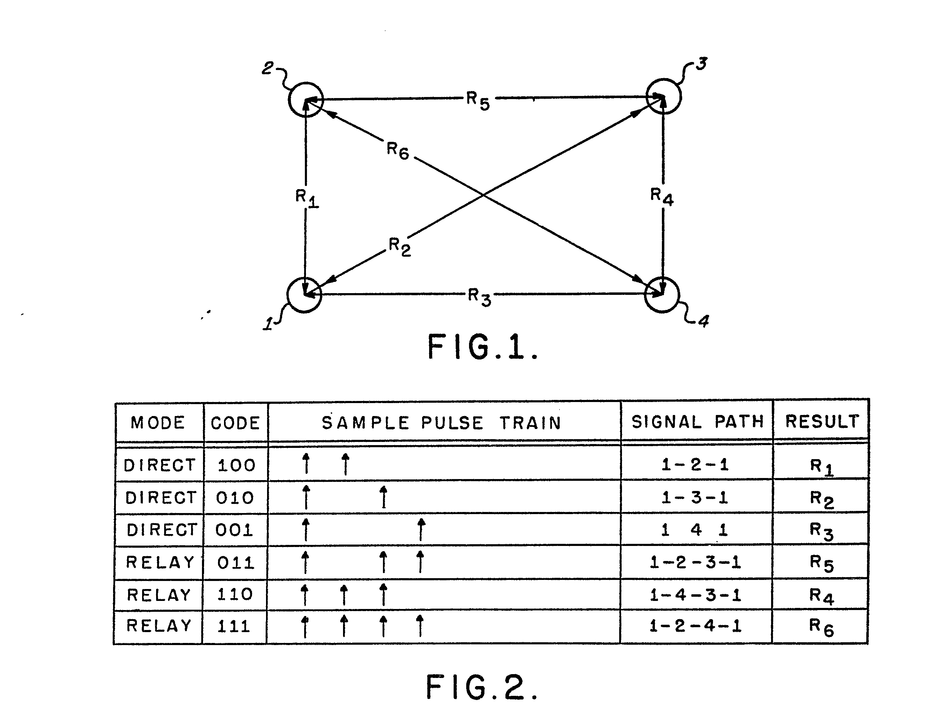

Referring now to Figure 1, assume an array of transponder stations 1, 2, 3 and 4 is deployed about an area wherein the instantaneous position of a vehicle is to be determined. It should be noted that the area may be situated on land or sea and the vehicle may be one suitable for operation in the area situation. As depicted in Figure 1, the various transponder stations are separated by range distances (baselines) $R_1$, $R_2$, $R_3$, $R_4$, $R_5$, $R_6$, respectively. Assume further that the transponder at station 1 is a "smart" transponder having interrogation equipment or an external access port for coupling to interrogation equipment on board the vehicle.

Briefly, the system of the invention uses a direct mode to measure base lines adjacent the smart transponder such as $R_1$, $R_2$, $R_3$ and a relay mode to measure remote base lines such as $R_4$, $R_5$, and $R_6$ of Figure 1. Thus all baseline distances are measured and this information is stored in a system memory on board the vehicle. A separate time division access code activates the relay mode. In the relay mode, a particular transponder is instructed to relay its output signal to another transponder, then this latter transponder sends a signal back to the smart transponder. This mode allows the system to measure the baselines which cannot be accessed directly from the "smart" transponder location.

Figure 2 illustrates the method by which the sample time domain access codes are used to obtain the desired baseline information for the array depicted in Figure 1.

Assuming again that transponder 1 is being used as the smart transponder, this transponder first interrogates each of the other transponders in the direct mode by sequentially transmitting the interrogation codes 100, 010, and 001. Upon reception of the assigned interrogation codes, the transponders emit pulses which are utilised for measurements of the radial baseline $R_1$, $R_2$, and $R_3$ as indicated in Figure 2.

A separate set of time division access codes then enable the relay mode. For example, when the 011 code is transmitted, transponder 2 is activated to emit the interrogation code for transponder 3. This relays the signal from transponder 2 through transponder 3 back to the smart transponder 1 to yield an elapsed time measurement corresponding to $R_1 + R_5 + R_2$. Subtracting the sum of the $R_1$ and $R_2$ measurements obtained by the direct mode yields a measurement of remote baseline $R_5$. The measurements of remote baselines $R_4$ and $R_6$ are made

in a similar fashion as indicated in Figure 2. Distances from the smart transponder 1 to each of the other transponder stations, determined in this manner, are then stored in the memory of the computer on board the vehicle. Thereafter, the interrogation equipment in the vehicle may sequentially emit the transpond codes to determine the distance from the vehicle to each transponder station. This information and the stored transponder location information are then utilised by the computer accurately to determine the vehicles instantaneous position and its track.

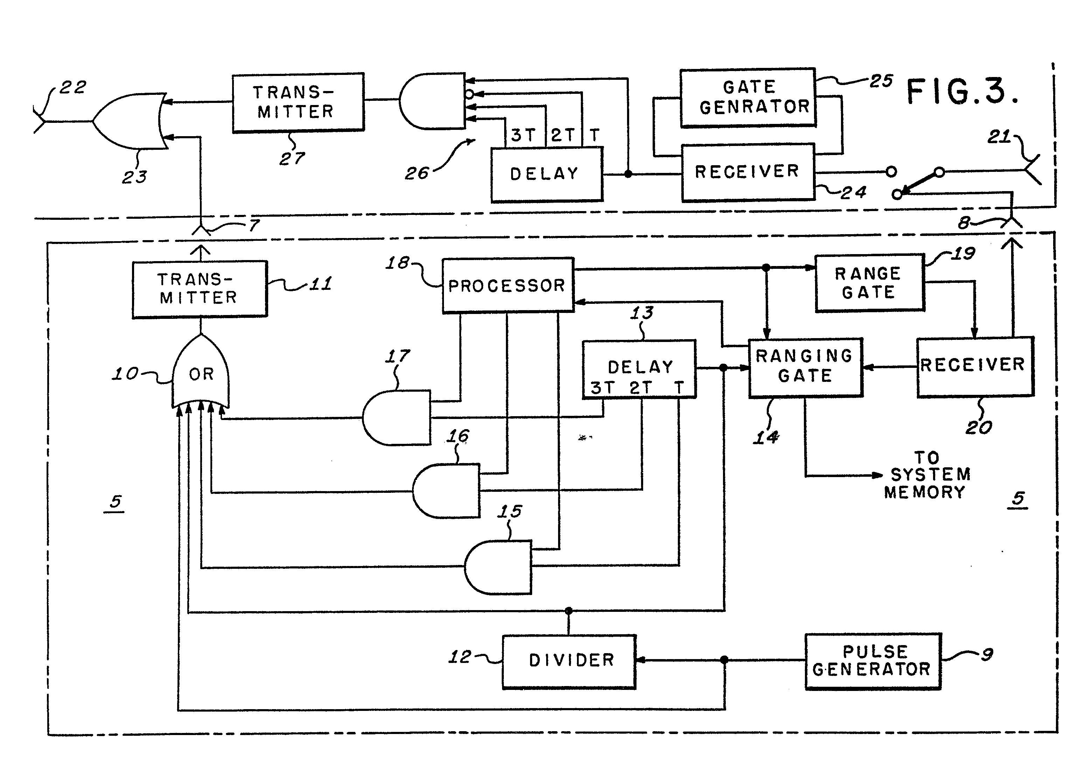

The block diagram of Figure 3 illustrates an interrogation system 5 on board a vehicle coupled to a smart transponder 6 such as the transponder at station 1 of Figure 1. The system 5 and transponder 6 are coupled through straight forward means 7 and 8.

Included in the interrogation equipment is a pulse generator 9 which generates a series of pulses which is coupled through an OR gate 10 and used to trigger a transmitter 11. The pulses are also applied to a pulse repetition rate divider 12 from which the lower repetition rate pulses are applied to the OR gate 10, to a tapped delay line 13, and to a ranging circuit 14 to be described.

Pulses from the divider 12 are delayed for intervals T, 2T and 3T in the delay line 13 and applied to AND gates 15, 16 and 17, respectively. Second input terminals on these AND 15, 16 and 17 gates are coupled to a processor 18 which acts to enable the various AND gates in accordance with a selected code.

Thus, for example, when the processor 18 couples a high level signal to the AND gate 15 and low level signals to AND gates 16 and 17, the transmitter 11 is triggered to transmit two signals with each pulse coupled to the delay line 13 from the divider 12, i.e. one pulse is applied to the transmitter through the OR gate 10

directly from the divider 12, and a second pulse coupled to the OR gate at a time T thereafter.

This is illustrated in the depiction of the sample pulse train in Figure 2, wherein each of the pulse trains comprise an initiating pulse followed by a series of coded pulses.

The signals applied to the transmitter 11 directly from the pulse generator 12 are used to synchronise the range gate of the transponder receivers with the signals transmitted in response to pulses from pulse generator 9. This particular technique is known in the art and described in the aforementioned U.S.-A-4,510,496.

With each station interrogation code, the processor 18 applies signals to a range gate 19, which serves to gate a receiver 20, and to a ranging circuit 14.

The receiver 20 is coupled to receive signals from the receiving antenna 21 during the baseline measurement process. During this process, the interrogation circuit transmitter 11 is coupled to the smart transponder's transmitting antenna 22 through an OR gate 23.

The ranging circuit 14 detects the time difference between a transmitted pulse and the resultant returned pulse and translates this time difference into a range measurement. Such ranging circuits are known in the art and may, for instance, comprise apparatus of the type described in U.S.-A-3,979,749.

In operation, the receiving antenna is switched to the receiver 24 in the smart transponder, the receiver 24 being controlled by a gate generator 25. When an appropriately coded signal is received from the vehicle, the signal from the receiver passes through a code detector circuit 26 to actuate a transmitter 27 so as to radiate a responsive pulse from the antenna 22. These elements are not used during the baseline measurement process.

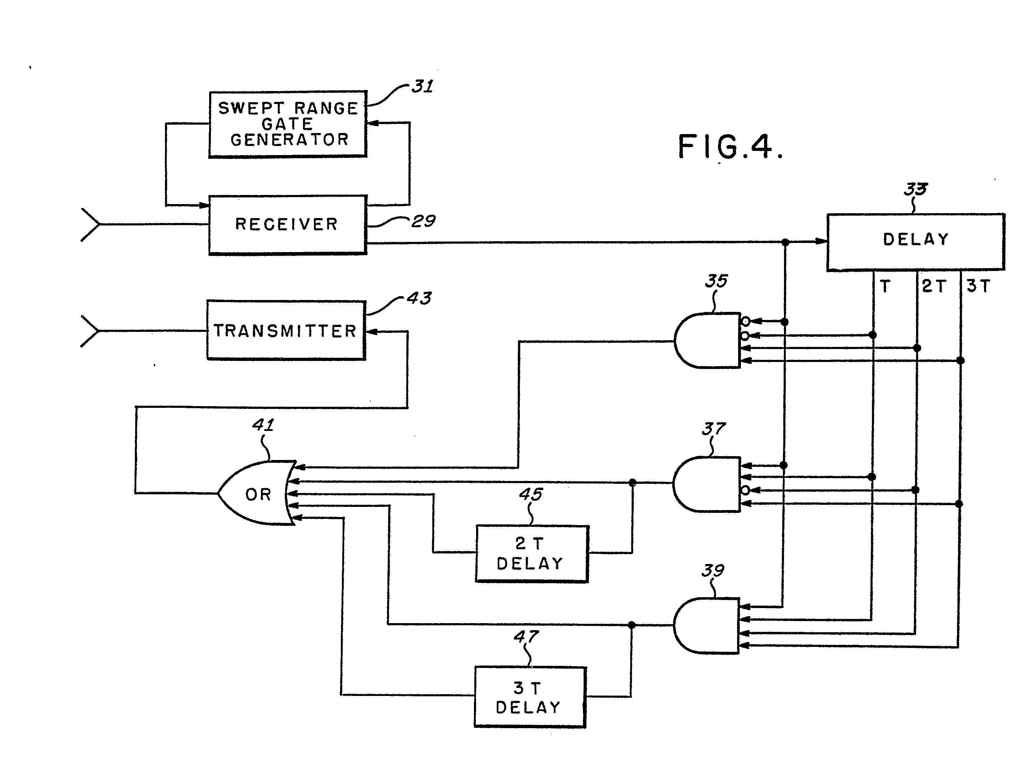

Figures 4, 5 and 6 are block diagrams illustrating the transponder circuits at stations 2, 3 and 4 of Figure 1, respectively. These circuits are used to transmit the coded signals indicated in the table of Figure 2.

Referring specifically to the transponder for station 2 depicted in Figure 4, incoming signals are received by a receiver 29 controlled by a conventional swept range gate generator 31. Output signals from the receiver are applied to a tapped delay line 33 which delays the received pulses for intervals of T, 2T and 3T. The pulses applied to the delay line 33, together with the delayed pulses, are applied either directly or through inverters to AND gates 35, 37 and 39. It will be recalled that each transmitted signal consists of an initial pulse followed by a three-pulse coded signal or "interrogation code". The initial pulse applied to the delay line 33 progresses down the delay line for an interval of 3T at which time it is applied directly to an input at each of the AND gates 35, 37 and 39. At this time the first of the three coded pulses will appear at the 2T terminal, the second of the coded pulses will appear at the T terminal and the third of the coded pulses will appear simultaneously at the input to the delay line 33. Each of the AND gates 35, 37 and 39 is coupled to the delay line by a different combination of direct and inverted couplers so that each AND gate passes a signal only when a specific three-pulse code is received. Gate 35, for instance, will pass a pulse upon receipt of a 100 coded signal, whereas gate 37 will pass a pulse upon receipt of a 011 signal, and gate 39 will pass a pulse upon receipt of a 111 coded signal. The tapped delay line and the AND gates thus effectively operate as code detector circuits.

The output of gate 35 is applied directly through an OR gate 41 to a transmitter 43. The output of gate 37 is applied directly to the OR gate and through a 2T delay means 45 to the OR gate. The output of gate 39 is applied directly to the OR gate and through a 3T delay 47 to the OR gate.

As will be explained, the signal from the gate 35 is used to transmit a response signal directly back to the smart transponder, whereas signals from the gates 37 and 39 are used in relay modes to actuate other transponders.

The delay means 45 and 47, together with the direct lines intercoupling the respective AND gates and the OR gate, act as encoding devices to provide a freshly coded signal that will actuate another remote transponder.

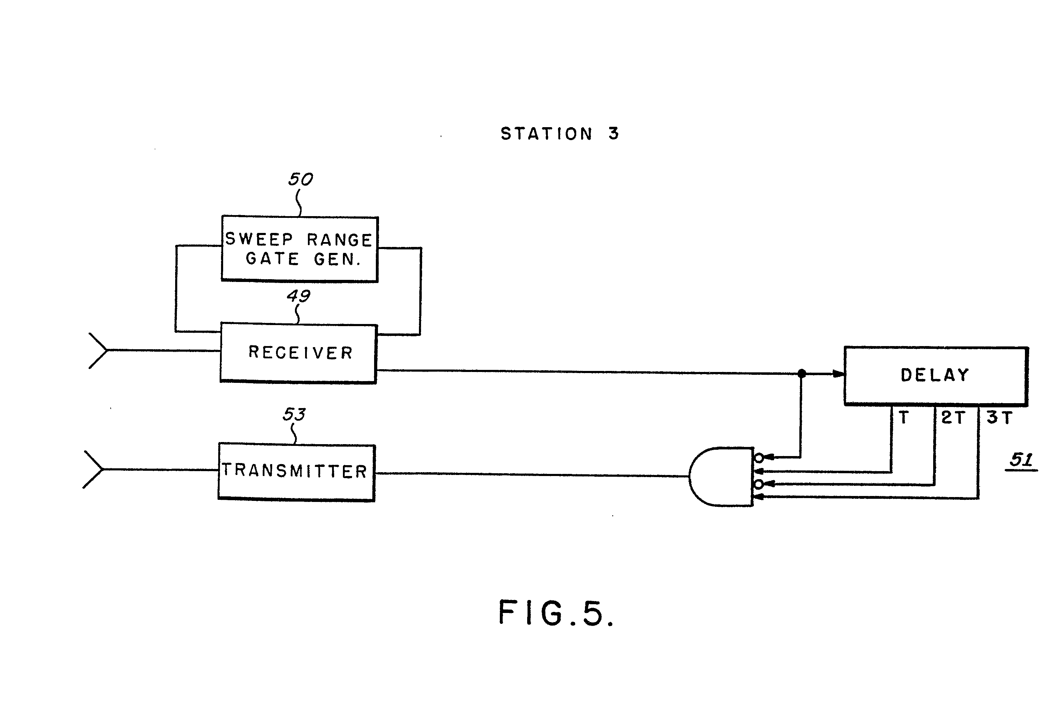

The transponder at station 3 may have the configuration illustrated in Figure 5. This transponder comprises a receiver 49, a swept range gate generator 50, a code detector circuit 51, and a transmitter 53. The station 3 transponder responds only to a 010 coded signal and transmits a return signal only to the smart transponder at station 1.

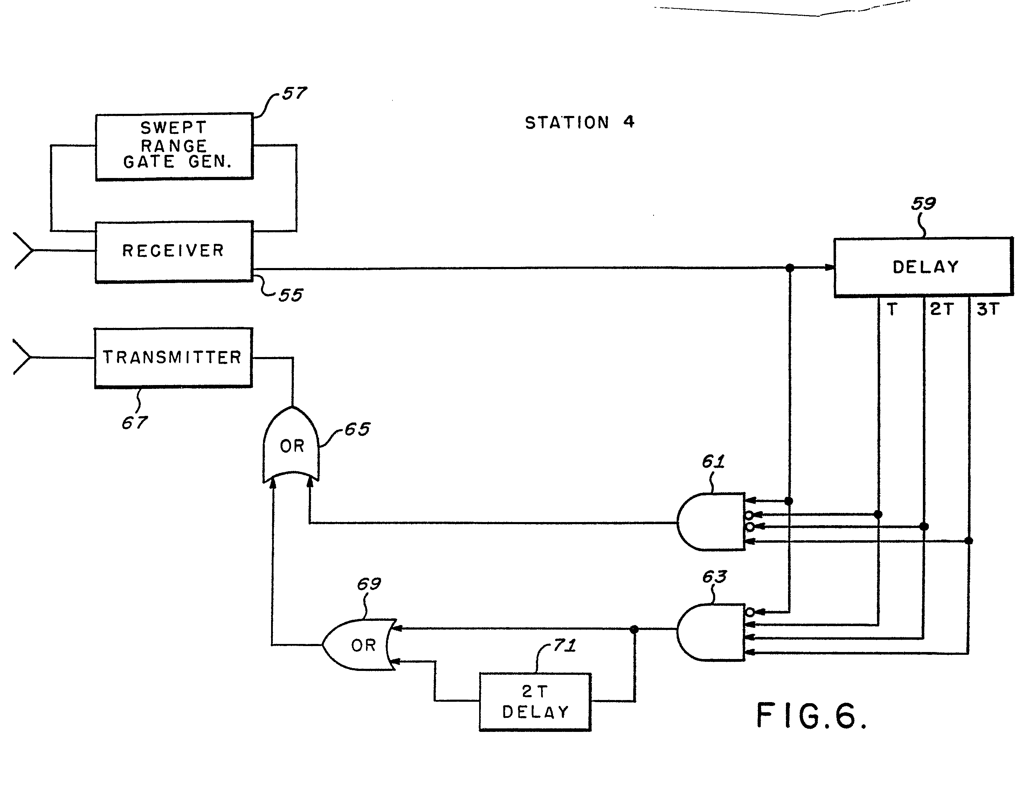

The transponder at station 4 may have the configuration illustrated in Figure 6. The transponder includes a receiver 55 controlled by a swept range gate generator 57, a tapped delay line 59; first and second AND gates 61 and 63 which cooperate with the delay means to form first and second code detector circuits, respectively.

The AND gate 61 responds to a 001 interrogation code signal so as to pass an output signal through an OR gate 65 to a transmitter 67. The resulting transmitted signal is received by the smart transponder at station 1.

The AND gate 63 responds to the 110 relay code and provides a transmit signal to transmitter 67 via the OR gate 65 and a time delay circuit 69. The time delay circuit 69 provides a delay T to the signal from AND 63, while the undelayed AND gate 63 output pulse is coupled to the transmitter to provide the reference pulse. This sequence causes transmitter 67 to emit a 010 coded signal, the interrogation code for the transponder at station 3. In response to this code the transponder at station 3 transmits a pulse to the "smart" transponder at station 1.

The operation of the various transponders can be understood by referring to the table of Figure 2, together with the various block diagrams.

It will be noticed that the entire reference coordinate grid acquisition procedure includes three direct mode measurements and three relay mode measurements.

The radial baseline $R_1$ is first determined by programming the processor 18 (Figure 1) to provide a 100 interrogation code to the transmitter 11. When this code is received at station 2, the received signal passes through the tapped delay 33 which couples the coded signal to the AND gate 35, wherefrom a signal is emitted to actuate the transmitter 43 and cause a signal to be returned to station 1. This returned signal is received by the receiver 20 (Figure 3), whereafter the ranging circuit 14 provides a measure of the range $R_1$ for entry in the system memory.

Similarly, radial baseline $R_2$ is determined by programming the processor 18 to provide a 010 interrogation code signal. When this coded signal is received at station 3 (Figure 5), the code detector circuit provides an output signal which causes the transmitter 53 to emit a return pulse to the interrogation circuit 5 at station 1.

In like manner, range $R_3$ is determined by providing a 001 interrogation code to be transmitted from station 1. This coded signal is received at station 4 (Figure 6) to open the gate 61 causing the transmitter 67 to emit a return signal to the interrogation circuit at station 1.

The remaining measurements utilise a relay mode. Measurement of the remote baseline $R_4$, for instance, is initiated by programming the processor 18 to provide a 110 interrogation code. This causes gate 63 at station 4 to couple a pulse to the delay line 69, wherefrom a 010 transmit signal is provided to the transmitter 67. The resulting transmitted 010 signal is received at station 3, opens the AND gate in the code detector circuit 51, and causes the transmitter 53 to radiate a return signal to station 1. The ranging circuit 14 (Figure 3) senses a cumulative range equal to $R_3 + R_4 + R_2$. Since $R_2$ and $R_3$ are known, $R_4$ can be readily determined.

The remote baseline $R_5$ is determined by programming the processor 18 to provide a 011 interrogation signal. When radiated from station 1, this signal triggers a response in station 2 (Figure 4) which causes the gate 37 to provide a 010 signal which causes a transmitter 53 at station 3 (Figure 5) to radiate a signal back to station 1. Again the signal path leads from station 1 to station 2, to station 3 and back to station 1. Subtraction of the known ranges $R_1$ and $R_2$ from the total indicated range provides the desired $R_5$ measurement.

Finally, $R_6$ is determined by providing a 111 interrogation code. This opens the AND gate 39 in the transponder at station 2 (Figure 4) which functions to transmit a 001 signal from the transmitter 43. This latter signal causes the AND gate 61 at station 4 (Figure 6) to couple a trigger pulse to the transmitter 67. The resulting radiated signal is detected by the receiver 20 in the interrogation system 5 (Figure 3). The signal path due to the initial transmission of the 111 code embraces $R_1$, $R_3$ and $R_6$. Since $R_1$ and $R_3$ have been determined, $R_6$ can be readily computed.

Although the foregoing description concerns a system utilising an array of four transponders, it will be appreciated that the principles of the invention may be applied to arrays of fewer or more than four transponders where desired.

Claims

1. An apparatus for establishing a reference system for object position determination, characterised in that the apparatus comprises a smart transponder (1); a plurality of remote transponders (2, 3, 4) deployed at fixed positions relative to the smart transponder; interrogation code generating means (18) at the smart transponder; means at the smart transponder responsive to the code generating means for transmitting interrogation signals; means at the smart transponder for signals returned in response to the interrogation signals; each of the remote transponders (3, 4, 5) being constructed to respond to interrogation code signals unique to that transponder to generate a return signal to the smart transponder, at least one of the remote transponders being further constructed to generate an interrogatin code of another remote transponder in response to relay code signals unique to said at least one remote transponder, whereby operation in a relay mode is provided wherein a relay code signal from the smart transponder causes a first remote transponder to emit an interrogation code of a second remote transponder which causes the second remote transponder to emit a pulse for detection by the smart transponder; and ranging means (14), at the smart transponder, for determining elapsed time between a transmission of an interrogation or relay code transmitted by the smart transponder and a signal received at the smart transponder in response thereto.

2. The apparatus according to claim 1, characterised in that the interrogation relay codes are time domain access codes in which individual characters are represented in binary form.

3. Apparatus according to claim 1 or 2, characterised in that each of the remote transponders (2, 3, 4) includes code detector means (33, 35; 51; 59, 61) responsive to the unique interrogation code for generating a transmitter trigger and transmitter means (43, 53, 67) responsive to the transmitter trigger for providing return signals to the smart transponder (1).

4.   Apparatus according to claim 3, characterised in that the code detector means include a tapped delay line (33, 51, 59) coupled to receive incoming signals and an AND gate (35, 51, 61) having multiple input terminals coupled to output terminals of the tapped delay line in a manner to provide an output signal when a particular binary coded signal is received from the tapped delay line.

5.   Apparatus according to any of the preceding claims, characterised in that the transponders (1, 2, 3, 4) are deployed in a rectangular pattern with a single transponder at each corner of a rectangle such that first and second remote transponders (2, 4) are positioned on baselines ($R_1$, $R_3$) radiating from the smart transponder (1) at right angles to each other and a third remote transponder (3) is positioned on a baseline ($R_2$) radiating diagonally across the rectangle from the smart transponder, the first remote transponder (2) having encoding means for providing a signal capable of actuating the second remote transponder (4) upon receipt of an actuating signal from the smart transponder resulting from a relay mode interrogation signal having a first specified value, and the second remote transponder (4) being constructed to radiate a return signal to the smart transponder when thus actuated.

6.   Apparatus according to claim 5, characterised in that the first remote transponder (2) further includes encoding means (35, 37, 39) for actuating the third remote transponder (3) upon receipt of an actuating signal from the smart transponder (1) resulting from a relay mode interrogation signal having a second specified value, the third remote transponder being constructed to radiate a return signal to the smart transponder when

0242983

thus actuated.

7.     Apparatus according to claim 5 or 6, characterised in that the second remote transponder (4) further includes encoding means (51) for actuating the third remote transponder (3) upon receipt of an actuating signal from the smart transponder (1) resulting from a relay mode interrogation signal having a third specified value, the third remote transponder being constructed to radiate a return signal to the smart transponder when thus actuated.

## FIG.1.

| MODE | CODE | SAMPLE PULSE TRAIN | SIGNAL PATH | RESULT |
|---|---|---|---|---|
| DIRECT | 100 | ↑ ↑ | 1 – 2 – 1 | $R_1$ |
| DIRECT | 010 | ↑ ↑ | 1 – 3 – 1 | $R_2$ |
| DIRECT | 001 | ↑ ↑ | 1 4 1 | $R_3$ |
| RELAY | 011 | ↑ ↑ ↑ | 1 – 2 – 3 – 1 | $R_5$ |
| RELAY | 110 | ↑ ↑ ↑ | 1 – 4 – 3 – 1 | $R_4$ |
| RELAY | 111 | ↑ ↑ ↑ ↑ | 1 – 2 – 4 – 1 | $R_6$ |

## FIG.2.

0242983

FIG.3.

FIG.4.

FIG.5.

STATION 4

SWEPT RANGE GATE GEN. 57

RECEIVER 55

TRANSMITTER 67

DELAY 59

3T
2T
T

61

63

2T DELAY 71

OR 65

OR 69

FIG.6.